# EUROPÄISCHE PATENTSCHRIFT

(11) **EP 3 936 324 B1**
(45) Veröffentlichungstag und Bekanntmachung des Hinweises auf die Patenterteilung: **10.05.2023**
(21) Anmeldenummer: 20185224.1
(22) Anmeldetag: 10.07.2020
(51) Int. Cl.: B32B 1/00, B32B 3/30, B32B 3/28, B32B 3/26, B32B 3/04, B32B 3/08, B32B 5/02, B32B 7/027, B32B 7/05, B32B 7/08, B32B 7/12, B32B 15/04, B32B 15/08, B32B 15/14, B32B 15/18, B32B 9/00, B32B 9/04, E04B 1/80, F16L 59/065

(54) **THERMISCHES VAKUUMDÄMMELEMENT**
THERMAL VACUUM INSULATING ELEMENT
ÉLÉMENT ISOLANT THERMIQUE SOUS VIDE

(43) Veröffentlichungstag der Anmeldung: 12.01.2022
(73) Patentinhaber: V21 GmbH, 22765 Hamburg (DE)
(72) Erfinder: LANG, Malte, 53949 Dahlem (DE); WIEDENROTH, Roland, 22765 Hamburg (DE)
(74) Vertreter: Samson & Partner Patentanwälte mbB

(56) Entgegenhaltungen:
- EP-A2- 2 462 372
- WO-A2-2011/050800
- DE-A1-102007 056 837
- US-A- 6 037 033

## Beschreibung

Die vorliegende Erfindung betrifft ein thermisches Vakuumdämmelement.

Die hohe erreichbare Isolationswirkung thermischer Vakuumdämmelemente liegt in der fehlenden Wärmeleitfähigkeit von Vakuum begründet. Ohne Teilchen kann kein Wärmetransport stattfinden. Die verbleibende tatsächliche Wärmeleitung erfolgt über einen Stützkern, der das Vakuumdämmelement mechanisch stabilisiert und über Ränder des Vakuumdämmelements, die den vakuumierten Raum seitlich begrenzen.

Herkömmlicher Weise bestehen Vakuumdämmelemente aus einem offenporigen Stützkern, der von mehreren Lagen metallisierter Kunststofffolie umhüllt ist. Das Material des Stützkerns sollte selbst eine geringe Wärmeleitfähigkeit aufweisen. Bekannte Stützkerne sind häufig aus einem pulverförmigen Dämmstoff wie z. B. pyrogener Kieselsäure gefertigt. Als weiteres Kernmaterial sind Glasfaservliese bekannt.

WO 2011/016693 A2, US 6,037,033 und DE 10 2007 056 837 A1 zeigen verschieden ausgebildete Stützkerne. WO 2011/050800 A2 zeigt Abstandhalteranordnungen, die zwei voneinander beabstandete Wandungen umfassen. An den Wandungen sind Druckaufnehmer vorragend angeordnet, die aneinander vorbeiragen und voneinander beabstandet sind. Ein beispielsweise aus einer Faser ausgebildetes Zugkraft-Übertragungselement verbindet die Druckaufnehmer miteinander und fängt einen durch ein Vakuum erzeugten Druck auf. Eine randlose Verbindung zwischen einzelnen Abstandhalteranordnungen vermeidet Randwärmeübertragungsprobleme. Eine Vakuumierung erfolgt erst vor Ort, der Rand wird dabei duch einen Metallstreifen abgedichtet.

Anwendungen von Vakuumdämmplatten liegen beispielsweise im Bereich von Kühl- und Gefrierschränken sowie im Bereich von Warmwasserspeichern. Weitere bekannte Anwendungen liegen im Bereich der Gebäudedämmung. Generell können thermische Wärmedämmelemente überall dort eingesetzt werden, wo eine hohe thermische Isolation bei geringer Schichtdicke der Isolationsschicht gefragt ist.

Nachteilig bei den bisher bekannten Vakuumdämmplatten ist die sehr energieaufwändige und teure Herstellung des Stützkerns. Zudem sind die Platten sehr empfindlich, da nur eine unbeschädigte Kunststofffolie das Vakuum garantiert.

Aus diesen und anderen Gründen besteht ein Bedarf an der vorliegenden Erfindung. Es kann eine Aufgabe der Erfindung sein, eine Vakuumdämmplatte bereitzustellen, die weniger Energie zur Herstellung benötigt. Es kann eine Aufgabe der Erfindung sein, eine robustere Vakuumdämmplatte bereitzustellen. Es kann eine Aufgabe der Erfindung sein, eine vollständig recyclingfähige Vakuumdämmplatte bereitzustellen.

Die Ziele und Merkmale der vorliegenden Erfindung werden deutlich in der folgenden Beschreibung von Ausführungsbeispielen, die mit Bezug auf die beigefügten Figuren erfolgt, in denen:
Fig. 1 schematisch eine Seitenansicht eines erfindungsgemäßen thermischen Vakuumdämmelements zeigt;
Fig. 2 schematisch eine Kraftübertragung in dem erfindungsgemäßen thermischen Vakuumdämmelement der Fig. 1 zeigt;
Fig. 3 schematisch eine Draufsicht auf ein erfindungsgemäßes Begrenzungsteil mit Stützelementen zeigt;
Fig. 4 schematisch einen Schnitt entlang der Linie A-A` in Fig.1 zeigt; und
Fig. 5 schematisch eine Seitenansicht durch ein erfindungsgemäßes Vakuumdämmelement zeigt, das eine Kante ausbildet.

Im Folgenden sind unter Bezugnahme auf die Zeichnungen Gesichtspunkte und Ausführungsformen beschrieben, worin gleiche oder ähnliche Bezugszeichen im Allgemeinen benutzt werden, um auf gleiche oder ähnliche Elemente zu verweisen. In der folgenden Beschreibung sind zahlreiche bestimmte Einzelheiten dargelegt, um ein gründliches Verständnis eines oder mehrerer Gesichtspunkte der Ausführungsformen zu bieten. Einem Fachmann kann jedoch offensichtlich sein, dass ein oder mehrere Gesichtspunkte der Ausführungsformen mit einem geringeren Maß der bestimmten Einzelheiten ausgeführt werden kann. In weiteren Fällen sind Elemente in schematischer Form gezeigt, um das Beschreiben eines oder mehrerer Gesichtspunkte der Ausführungsformen zu erleichtern. Die folgende Beschreibung soll daher nicht als beschränkend aufgefasst werden. Es wird bemerkt, dass die Darstellung der verschiedenen Elemente in den Figuren nicht notwendigerweise maßstabsgetreu ist.

In der Beschreibung mit Bezug auf die Zeichnungen verwendete Richtungsterminologie, wie etwa zum Beispiel "oben", "unten", "Oberseite", "Unterseite", "links", "rechts", "Vorderseite", "Rückseite", "senkrecht", "waagerecht" usw. ist nicht beschränkend zu verstehen. Bestandteile von Ausführungsformen können in einer Anzahl unterschiedlicher Ausrichtungen positioniert werden, die Richtungsterminologie wird lediglich zur Erläuterung verwendet. Es versteht sich, dass weitere Ausführungsformen verwendet werden können und bauliche oder logische Veränderungen vorgenommen werden können, ohne von dem Konzept der vorliegenden Erfindung abzuweichen.

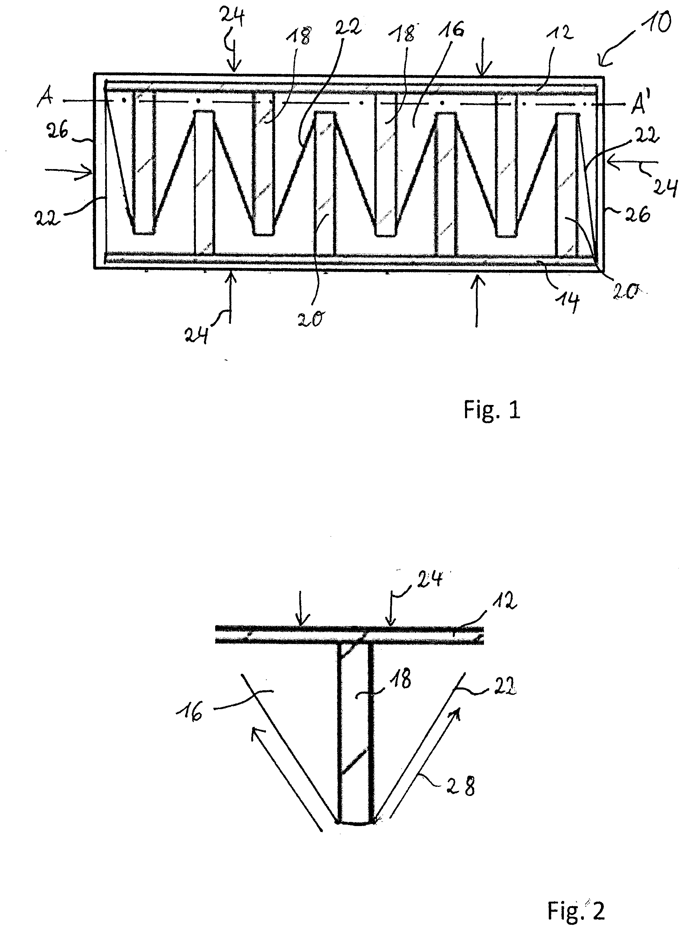

Fig. 1 zeigt stark schematisiert eine Seitenansicht eines erfindungsgemäßen thermischen Vakuumdämmelements 10. Das Vakuumdämmelement 10 weist ein erstes flächiges Begrenzungsteil 12 und ein zweites flächiges Begrenzungsteil 14 auf. Das Begrenzungsteil 12 und das Begrenzungsteil 14 definieren zwischen sich einen vakuumierten Raum 16. Das erste flächige Begrenzungsteil 12 und das zweite flächige Begrenzungsteil 14 können zueinander parallel angeordnet sein. Das erste flächige Begrenzungsteil 12 und das zweite flächige Begrenzungsteil 14 sind voneinander beabstandet. Von dem ersten Begrenzungsteil 12 zu dem zweiten Begrenzungsteil 14 soll ein Wärmetransport minimiert werden.

Von dem ersten Begrenzungsteil 12 weg erstrecken sich erste Stützelemente 18 in den vakuumierten Raum 16. Von dem zweiten Begrenzungsteil 14 weg erstrecken sich zweite Stützelemente 20 in den vakuumierten Raum 16. Die Begrenzungsteile 12, 14 mit den Stützelementen 18, 20 sind so zueinander angeordnet, dass die ersten Stützelemente 18 und die zweiten Stützelemente 20 aneinander vorbeiragen und voneinander beabstandet sind.

Die ersten Stützelemente 18 erstrecken sich in Richtung des zweiten Begrenzungsteils 14. Die ersten Stützelemente 18 berühren nicht das zweite Begrenzungsteil 14. Die zweiten Stützelemente 20 erstrecken sich in Richtung des ersten Begrenzungsteils 12. Die zweiten Stützelemente 20 berühren nicht das erste Begrenzungsteil 12. Die ersten Stützelemente 18 können einstückig mit dem ersten Begrenzungsteil 12 ausgefertigt sein. Die zweiten Stützelemente 20 können einstückig mit dem zweiten Begrenzungsteil 14 ausgefertigt sein.

Das erste Begrenzungsteil 12 mit den ersten Stützelementen 18 kann in einer Ausführungsform als ein wellenförmiges oder gewelltes Bauteil ausgeführt sein. Das zweite Begrenzungsteil 14 mit den zweiten Stützelementen 20 kann in der Ausführungsform ebenfalls als ein wellenförmiges oder gewelltes Bauteil ausgeführt sein. Es kann eine Vielzahl von Wellen vorgesehen sein.

Das Vakuumdämmelement 10 weist ein Fasergebilde 22 auf. Das Fasergebilde 22 verbindet die ersten Stützelemente 18 und die zweiten Stützelemente 20 im vakuumierten Raum 16 miteinander. Das Fasergebilde 22 kann an wenigstens einem der ersten Stützelemente 18, an wenigstens einem der zweiten Stützelemente 20, an dem ersten Begrenzungsteil 12 und/oder an dem zweiten Begrenzungsteil 14 fixiert oder festgelegt sein. Ein oberer Teil des Vakuumdämmelements umfassend das erste Begrenzungsteil 12 und die ersten Stützelemente 18 ist mit einem unteren Teil des Vakuumdämmelements umfassend das zweite Begrenzungsteil 14 und die zweiten Stützelemente 20 über das Fasergebilde 22 verbunden. Das Fasergebilde 22 weist eine geringe Wärmeleitfähigkeit auf. Das Fasergebilde 22 ist ausgestaltet, zumindest den durch das Vakuum auf das erste Begrenzungsteil 12 und das zweite Begrenzungsteil 14 erzeugten Druck aufzufangen. Das Fasergebilde 22 kann ferner ausgestaltet sein, weitere Kraftaufwendungen auf das Vakuumdämmelement 10 aufzufangen, die durch eine Verwendung des Vakuumdämmelements 10 bedingt sind. Die aufgrund des herrschenden Vakuums auf die Begrenzungsteile 12, 14 durch den Umgebungsdruck bedingte einwirkende Kraft ist durch Pfeile 24 symbolisch dargestellt.

Das Vakuumdämmelement 10 weist Mittel 26 zum Abdichten des vakuumierten Raums 16 auf, die nachfolgend näher erläutert sind.

Eine Wärmeleitung von dem ersten Begrenzungsteil 12 zu dem zweiten Begrenzungsteil 14 kann nur über das Fasergebilde 22, die Mittel 26 zum Abdichten von Randbereichen 26 und den vakuumierten Raum 16, d.h. über im nicht perfekten Vakuum verbleibende Gasatome und Gasmoleküle erfolgen. Die Erfinder konnten hiermit eine Wärmeübertragung in einem Bereich von nur 10⁻⁵ W/mK nachweisen.

Mit Bezug auf Fig. 2 wird das Zusammenspiel zwischen den Stützelementen 18, 20 und dem Fasergebilde 22 deutlich. Fig. 2 zeigt einen kleinen Ausschnitt aus dem Vakuumdämmelement 10 der Fig. 1. Pfeile 24 zeigen die auf das Begrenzungsteil 12 einwirkende Kraft aufgrund des im Raum 16 herrschenden Vakuums. Die Kraft 24 wird auf das dargestellte Stützelement 18 übertragen und von dem Fasergebilde 22 aufgenommen. Durch die aneinander vorbeiragenden Stützelemente 18, 20 wird eine Kraftumlenkung der äußeren Druckbelastung auf eine Zugbelastung der Fasern des Fasergebildes 22 erreicht. Durch das schräg angeordnete Fasergebilde 22 werden auch ebenfalls auftretende Querkräfte aufgenommen.

Die Begrenzungsteile 12, 14 können eine obere und eine untere Oberfläche des Vakuumdämmelements 10 definieren. Zwischen dem ersten flächigen Begrenzungsteil 12 und dem zweiten flächigen Begrenzungsteil 14 ist das Vakuum ausgebildet. Das erste Begrenzungsteil 12 und das zweite Begrenzungsteil 14 sind beabstandet voneinander und können im Wesentlichen parallel zueinander verlaufen. Die Begrenzungsteile 12, 14 können aus hochvakuumtauglichem Material gefertigt sein. Die Wärmeleitfähigkeit der Begrenzungsteile 12, 14 ist für die Wärmeleitfähigkeit des Vakuumdämmelements nicht von Bedeutung, da sie einander nicht berühren. Die Begrenzungsteile 12, 14 können aus Metall gefertigt sein. Die Begrenzungsteile 12, 14 können aus Edelstahl gefertigt sein. Die Begrenzungsteile 12, 14 können aus Keramik, Glas, Laminat, und/oder Kunststoff gefertigt sein. Die Begrenzungsteile 12, 14 können ein metallbeschichtetes Faserlaminat umfassen oder aus diesem gefertigt sein.

Die Begrenzungsteile 12, 14 können flach sein und jeweils vollständig in einer Ebene liegen. So lassen sich Platten ausbilden. Die Platten können beispielsweise zur Gebäudeisolierung dienen. Die Platten können mehrlagig verlegt werden. Die einzelnen Platten der aufeinanderfolgenden Lagen können dabei gegeneinander versetzt angeordnet werden, so dass Stoßkanten verschiedener Lagen nicht übereinander zu liegen kommen. Die Platten können in anderen Worten ziegelsteinartig übereinander angeordnet werden.

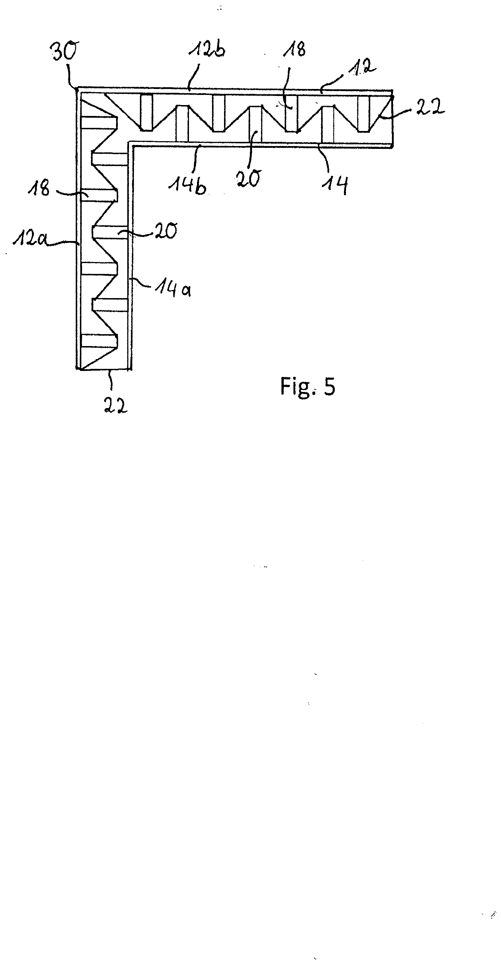

Die Begrenzungsteile 12, 14 können in anderen Ausführungsformen eine beliebige Form annehmen. Die Begrenzungsteile 12, 14 können gebogen sein. In einer Ausführungsform können die Begrenzungsteile 12, 14 eine Kante umfassen, wie anhand der Fig. 5 näher erläutert. In einer Ausführungsform können die Begrenzungsteile 12, 14 eine Ecke ausbilden. Die Begrenzungsteile 12, 14 können für den jeweiligen Anwendungsfall ausgebildet sein. Werden nur ebene Platten zur Dämmung beispielsweise eines Raumes benutzt, so entstehen an den Kanten zwangsläufig Wärmebrücken, da ein unteres Begrenzungsteil 14 einer ersten Platte ein oberes Begrenzungsteil einer zweiten Platte an der Kante berührt. Die vorgeschlagen Ausbildung der Begrenzungsteile 12, 14 als Kante oder als Ecke erlaubt eine (Raum-) Dämmung ohne die Ausbildung thermischer Brücken.

Die Begrenzungsteile 12, 14 können jeweils vollflächig sein, beispielsweise aus einer durchgehenden Edelstahlplatte. Eine Edelstahlplatte ist kostengünstig herzustellen und kann am Ende der Lebensdauer des Dämmelements vollständig wiedergewonnen werden. Die Recycling-Rate ist sehr gut. Eine vollflächige Ausgestaltung kann eine mechanische Widerstandsfähigkeit des Vakuumdämmelements 10 erhöhen.

In anderen Ausführungsformen kann wenigstens eines der Begrenzungsteile 12, 14 Öffnungen oder Durchbrüche aufweisen. Wenigstens eines der Begrenzungsteile 12, 14 kann aus Draht geformt sein. Es kann gitterförmig ausgebildet sein. Wenigstens eines der Begrenzungsteile 12, 14 kann als Profilkonstruktion ausgebildet sein. Eine solche Struktur mit Öffnungen kann ein geringeres Gewicht aufweisen. Eine solche Struktur mit Öffnungen kann weniger Material verbrauchen. Bei größeren Öffnungen können die Begrenzungsteile mit dem Fasergebilde 22 überspannt sein.

Die Mittel 26 zum Abdichten des vakuumierten Raums 16 können wie in Fig. 1 dargestellt das gesamte Vakuumdämmelement 10 umschließen. Die Mittel 26 zum Abdichten des vakuumierten Raums 16 können ein Folienbeutel, insbesondere ein metallisierter Folienbeutel sein.

Die Mittel 26 zum Abdichten des vakuumierten Raums 16 können lediglich entlang der Ränder der sich gegenüberstehenden Begrenzungsteile 12, 14 verlaufen. Die Mittel 26 zum Abdichten des vakuumierten Raums 16 können direkt entlang der Ränder der Begrenzungsteile 12, 14 mit diesen diffusionsdicht verbunden sein. Die Mittel 26 zum Abdichten des vakuumierten Raums 16 sind mit den Begrenzungsteilen 12, 14 verklebt oder verschweißt. Die Mittel 26 zum Abdichten des vakuumierten Raums 16 können an ein oder an beide der Begrenzungsteile 12, 14 angeformt sein. Die Mittel 26 können aus dem gleichen Material wie die Begrenzungsteile 12, 14 gebildet sein.

Die Mittel 26 zum Abdichten des vakuumierten Raums 16 können aus diffusionsdichtem Material bestehen. Die Mittel 26 zum Abdichten des vakuumierten Raums 16 können sehr dünn ausgebildet sein, um eine Wärmeübertragung entlang der Ränder zu minimieren. Die Mittel 26 zum Abdichten des vakuumierten Raums 16 können aus dünner Metallfolie ausgebildet sein. Eine Dicke der Metallfolie kann zwischen 2 µm und 50 µm betragen. Eine Dicke der Metallfolie kann einen anderen Wert aufweisen. Die Mittel 26 zum Abdichten des vakuumierten Raums 16 können aus Edelstahlfolie mit einer Dicke zwischen 5 µm und 20 µm bestehen oder diese umfassen. Die Mittel 26 zum Abdichten des vakuumierten Raums 16 können aus Glas oder aus metallisierter Kunststofffolie bestehen. Der Randbereich des Vakuumdämmelements ist durch das Fasergebilde 22 verstärkt, wie ebenfalls der Fig. 1 zu entnehmen ist. Die Fasern des Fasergebildes 22 verlaufen im Randbereich senkrecht zu den Begrenzungsteilen 12, 14.

Die Stützelemente 18, 20 können an dem jeweiligen Begrenzungsteil 12, 14 befestigt sein. Die ersten und zweiten Stützelemente können mit dem ersten beziehungsweise dem zweiten Begrenzungsteil 12, 14 verschraubt, verlötet, verklebt, verschweißt, in dieses eingesteckt, eingeklemmt oder anderweitig befestigt sein. Die Stützelemente 18, 20 können mit dem jeweiligen Begrenzungsteil 12, 14 einteilig ausgebildet sein. Die Stützelemente 18, 20 können gleichförmig über die Begrenzungsteile 12, 14 verteilt sein. Die Stützelemente 18 können auf dem Begrenzungsteil 12 in einer Anordnung montiert sein, die versetzt ist zu einer Anordnung der Stützelemente 20 auf dem Begrenzungsteil 14.

Die Stützelemente 18 können eine gleiche Form haben wie die Stützelemente 20. Die Stützelemente 18 können sich in ihrer Form von den Stützelementen 20 unterscheiden.

Die Stützelemente 18, 20 können leistenförmig ausgebildet sein. Die Stützelemente 18, 20 können sich als Rippen über eine gesamte Ausdehnung der Begrenzungsteile 12, 14 erstrecken. Die Rippen können v-förmig ausgebildet sein, wobei die Öffnung des v dem jeweiligen Begrenzungsteil zugewandt sein kann.

Die Stützelemente 18, 20 können im Wesentlichen stabförmig ausgebildet sein. Die stabförmigen Stützelemente 18, 20 können in Reihen und Spalten gleichmäßig über die Begrenzungsteile 12, 14 verteilt sein. Stabförmige Stützelemente 18, 20 können einen im Wesentlichen rechteckigen Grundriss aufweisen. Stabförmige Stützelemente 18, 20 können einen im Wesentlichen quadratischen Grundriss aufweisen. Stabförmige Stützelemente 18, 20 können einen im Wesentlichen kreisförmigen oder ovalen Grundriss aufweisen. Stabförmige Stützelemente 18, 20 können einen beliebigen Grundriss aufweisen. Eine Dimensionierung und eine Anzahl von Stützelementen je Begrenzungsteil ist in starkem Maße abhängig von den verwendeten Materialien, dem Anwendungsbereich und eventuell zusätzlich auf das Vakuumdämmelement einwirkenden Kräften.

Die Stützelemente 18, 20 können Führungen für das Fasergebilde 22 aufweisen. Die Führungen können in der Form von Auskerbungen oder Nuten ausgeführt sein. Die Führungen können in der Form von seitlichen Einschnitten ausgeführt sein. Die Stützelemente 18, 20 können Löcher als Führungen aufweisen. Das Fasergebilde 22 kann an den Stützelementen 18, 20 fixiert sein. Die Stützelemente 18, 20 können Vorrichtungen zum Fixieren aufweisen. Die Vorrichtungen können Klemmvorrichtungen sein.

Über das Fasergebilde 22 erfolgt neben der Randabdichtung eine wesentliche Wärmeübertragung zwischen dem ersten Begrenzungsteil 12 und dem zweiten Begrenzungsteil 14. Das Fasergebilde 22 ist daher ausgestaltet, einen niedrigen Wärmeleitwert aufzuweisen. Das Fasergebilde 22 kann einen Wärmeleitwert von kleiner als 0,06 W/mK aufweisen. Das Fasergebilde 22 kann aus Glasfaser gebildet sein. Die Glasfaser kann einen Wärmeleitwert von etwa 1 W/mK aufweisen.. Das Fasergebilde 22 kann aus Aramidfaser mit einem Wärmeleitwert von etwa 0,04 W/mK gebildet sein. Das Fasergebilde 22 kann aus Nylon-, Hanf- oder Carbonfaser gebildet sein. Das Fasergebilde kann aus mehreren der genannten Materialien gebildet sein. Die Wärmeleitung ist zudem bestimmt durch einen Querschnitt des Fasergebildes.

Das Fasergebilde 22 sollte eine hohe Zugbelastbarkeit aufweisen, da über das Fasergebilde 22 eine hohe Kraft aufgenommen wird.

Derzeit scheint eine Aramidfaser besonders geeignet zu sein. Das Wort Aramid steht für aromatische Polyamide. Es handelt sich um anisotrope Polymerfasern. Sie haben eine geringere Dichte als Glasfasern und weisen eine besonders hohe Zugfestigkeit und eine hohe Zähigkeit aus. Sie sind sehr ermüdungsfest. Eine Zugfestigkeit kann bei etwa 2800 N/mm² liegen.

Bei dem Fasergebilde 22 kann es sich um einen Faserstrang oder Faden handeln. Der Faden 22 kann wie in Fig. 1 dargestellt mit einem Ende an dem ersten Begrenzungsteil 12 befestigt sein und dann abwechselnd über ein erstes Stützelement 18 und ein zweites Stützelement 20, ein weiteres erstes Stützelement 18, ein weiteres zweites Stützelement 20 usw. geführt und an dem zweiten Begrenzungsteil 14 befestigt sein.

Das Fasergebilde 22 als Faden kann je nach Anordnung der ersten und zweiten Stützelemente in unterschiedlichen Richtungen über die Stützelemente geführt sein.

Das Fasergebilde 22 kann in anderen Ausführungsformen als Gewebe ausgeführt sein. Das Gewebe kann die gesamte Fläche der Begrenzungsteile überdecken. Das Fasergebilde 22 kann in anderen Ausführungsformen als Gewebeband ausgeführt sein. Das Fasergebilde kann als geflochtenes Band ausgeführt sein. Verschiedene Ausgestaltungen des Fasergebildes 22 können miteinander kombiniert sein.

Das Fasergebilde 22 ist im Randbereich geführt und an den Rändern der Begrenzungsteile 12, 14 befestigt, um beispielsweise eine Abdichtungsfolie 26 im Randbereich zu verstärken. Das Fasergebilde 22 ist im Randbereich senkrecht von dem ersten Begrenzungsteil 12 zu dem zweiten Begrenzungsteil 14 geführt. Das Fasergebilde kann im Randbereich als Gewebe ausgeführt sein und zwischen den Stützelementen 18, 20 als Faden.

In einer Ausführungsform können die Begrenzungsteile 12, 14 als vollflächige Edelstahlplatten ausgebildet sein, mit einer engen Faserbespannung und einer dünnen Edelstahlfolie im Randbereich, die mit den Edelstahlplatten gasdicht verbunden ist. Die enge Faserbespannung kann so dimensioniert sein, dass sie eine sehr dünne Edelstahlfolie verstärkt. Hierdurch kann eine sehr robuste, recyclingfähige Vakuumdämmplatte zur Verfügung gestellt werden.

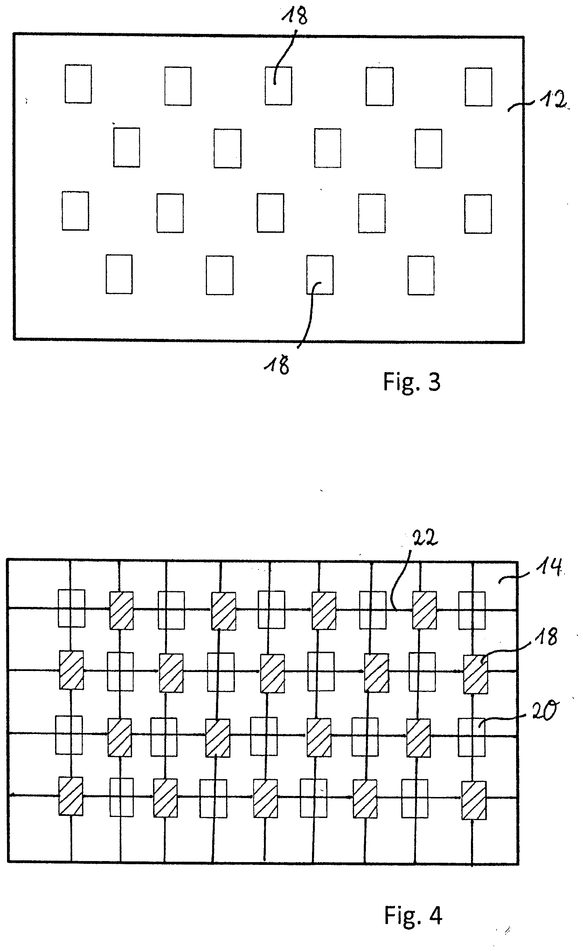

Fig. 3 zeigt eine Draufsicht auf das erste Begrenzungsteil 12 gemäß einer Ausführungsform. Erste stabförmige Stützelemente 18 sind in einem regelmäßigen Raster über die gesamte Fläche des Begrenzungsteils 12 verteilt. Die ersten Stützelemente 18 sind in Spalten und Reihen angeordnet. Der Querschnitt der ersten stabförmigen Stützelemente 18 ist in der dargestellten Ausführungsform rechteckig.

Fig. 4 zeigt einen Schnitt entlang der Linie A-A` in Fig. 1 mit Blick auf das zweite Begrenzungsteil 14. Die ersten Stützelemente 18 sind in dieser Darstellung geschnitten, während auf die zweiten Stützelemente 20 geblickt wird. In der Darstellung der Fig. 4 sind die Mittel 26 zum Abdichten des vakuumierten Raums weggelassen. In der dargestellten Ausführungsform ist das Fasergebilde 22 aus einzelnen Fäden beispielsweise einer Aramidfaser gebildet. Das Begrenzungsteil 14 ist beispielhaft rechteckig. Die einzelnen Fäden des Fasergebildes 22 laufen im Wesentlichen parallel zu den Rändern des Begrenzungsteils 14 und enden am Rand.

Die ersten Stützelemente 18 und die zweiten Stützelemente 20 ragen aneinander vorbei und sind voneinander beabstandet. Die Fäden des Fasergebildes 22 kreuzen sich jeweils auf den Stützelementen 18, 20. Sie können an ihren Kreuzungspunkten in bzw. auf den Stützelementen geführt sein (nicht dargestellt).

Fig. 5 zeigt schematisch eine Seitenansicht durch ein beispielhaftes Vakuumdämmelement, das eine Kante ausbildet. Sowohl das erste Begrenzungsteil 12 als auch das zweite Begrenzungsteil 14 sind so ausgebildet, dass sie eine Kante 30 bilden. In der abgebildeten Ausführungsform verläuft eine erste Teilfläche 12a des ersten Begrenzungsteils 12 rechtwinklig zu einer zweiten Teilfläche 12b und bildet damit die Kante 30. Entsprechendes gilt für das zweite Begrenzungsteil 14 mit erster Teilfläche 14a und zweiter Teilfläche 14b.

Dadurch wird auch im Kantenbereich eine Berührung von äußerem oder erstem Begrenzungsteil 12 und innerem oder zweitem Begrenzungsteil 14 vermieden und es bilden sich keine thermischen Brücken.

Die Ausbildung mit ersten Stützelementen 18 und zweiten Stützelementen 20 sowie Fasergebilde 22 ist analog zu den bisher beschriebenen Ausführungsformen und wird nicht näher erläutert.

In einer Ausführungsform ist ein erstes Vakuumdämmelement als ein auf einer Seite geöffneter Behälter ausgeformt. Beispielsweise sind das erste Begrenzungsteil 12 und das zweite Begrenzungsteil 14 in Form eines auf einer Seite geöffneten Quaders, Würfels oder Zylinders ausgebildet. Auch hier wird durch die Begrenzungsteile ein vakuumierter Raum definiert, in den wie oben beschrieben Stützelemente 18, 20 ragen, die über ein Fasergebilde 22 verbunden sind. Für die offene Seite kann ein zweites Vakuumdämmelement als Deckel bereitgestellt werden.

Das zweite Vakuumdämmelement kann im Wesentlichen die Form einer Platte aufweisen, die die äußere Form der fehlenden Seite abbildet. Alternativ kann als Deckel auch ein zweites Vakuumdämmelement dienen, das im Wesentlichen die gleiche Form wie das erste Vakuumdämmelement aufweist, jedoch etwas größer ausgebildet ist, so dass es über das erste Vakuumdämmelement gestülpt werden kann. Hierbei können die Seitenwände des größeren Vakuumdämmelements die Seitenwände des kleineren Vakuumdämmelements vollständig oder teilweise überdecken.

Das Vakuum verhindert dann den Wärmetransport vom Inneren des (inneren) Behälters nach außen. Diese Konstruktionsform kann z.B. bei Pufferspeichern oder auch bei Containern Anwendung finden. Vorzugsweise wird das Fasergebilde 22 bei dieser Ausführungsform stärker ausgelegt, da das Fasergebilde zusätzlich die statische Belastung des Inhalts tragen muss.

Mit den zwei, jeweils einseitig geöffneten und übereinander geschobenen Behältern entsteht eine leicht zu öffnende Vorrichtung mit hervorragenden thermischen Dämmeigenschaften.

Diese kann beispielsweise als Kühlbox Anwendung finden. In einer Ausführungsform sind hierbei die Begrenzungsteile nicht aus reinem Metall sondern aus metallbeschichtetem Faserlaminat hergestellt.

Bei der Herstellung des erfindungsgemäßen Vakuumdämmelements wird zunächst die Form wie beschrieben einschließlich der Abdichtung hergestellt und dann in bekannter Weise der umschlossene Raum vakuumiert, um einen vakuumierten Raum 16 bereitzustellen. Um die Qualität des Vakuums zu verbessern oder die Lebensdauer der Vakuumdämmelemente zu verlängern, kann in den Raum zwischen den Begrenzungsteilen 12, 14 ein Gettermaterial eingebracht werden, das beispielsweise von außen über die Zeit eindringende Gasmoleküle binden kann und somit das Vakuum auch bei einer Verschlechterung der Abdichtung aufrechterhalten kann. Die Erfinder haben mit einem Vakuum von etwa 10⁻⁴ mbar sehr gute Dämmwerte im Bereich von 10⁻⁵ W/mK erreicht.

Das erfindungsgemäße Vakuumdämmelement kann den bisher meist aus pyrogener Kieselsäure hergestellten Stützkern üblicher Vakuumisolationspaneele durch eine einfache Konstruktion ersetzen, die zum größten Teil aus Metall gefertigt sein kann. Hierdurch kann der Primärenergiebedarf bei der Herstellung erheblich reduziert werden. Auch wird die Herstellung kostengünstiger. Zudem kann bei Einsatz von Metallfolien im Randbereich die Diffusionsdichtigkeit und Widerstandsfähigkeit des Randes deutlich verbessert werden. Dies ermöglicht eine lange Lebensdauer und vereinfacht den Umgang mit dem Dämmstoff.

## Patentansprüche

1. Thermisches Vakuumdämmelement (10), umfassend:
ein erstes flächiges Begrenzungsteil (12) und ein zweites flächiges Begrenzungsteil (14), die voneinander beabstandet sind und zwischen sich einen vakuumierten Raum (16) definieren;
Mittel (26) zum Abdichten des vakuumierten Raums (16);
erste Stützelemente (18), die sich von dem ersten Begrenzungsteil (12) weg in den vakuumierten Raum (16) erstrecken und zweite Stützelemente (20), die sich von dem zweiten Begrenzungsteil (14) weg in den vakuumierten Raum (16) erstrecken, wobei die Begrenzungsteile (12, 14) mit den Stützelementen (18, 20) so angeordnet sind, dass die ersten Stützelemente (18) und die zweiten Stützelemente (20) aneinander vorbeiragen und voneinander beabstandet sind, und wobei die ersten Stützelemente (18) von dem zweiten Begrenzungsteil (14) beabstandet sind, und wobei die zweiten Stützelemente (20) von dem ersten Begrenzungsteil (12) beabstandet sind; und
ein Fasergebilde (22), das die ersten Stützelemente (18) und die zweiten Stützelemente (20) miteinander verbindet, wobei das Fasergebilde (22) eine geringe Wärmeleitfähigkeit aufweist und ausgestaltet ist, zumindest den durch das Vakuum auf das erste und das zweite Begrenzungsteil (12, 14) erzeugten Druck aufzufangen, **dadurch gekennzeichnet, dass**
das Fasergebilde (22) auch einen den vakuumierten Raum (10) begrenzenden Randbereich überspannt, und wobei die Begrenzungsteile (12, 14) vakuumdicht ausgebildet sind und die Mittel (26) zum Abdichten des vakuumierten Raums (16) eine Randfolie umfassen, die entlang der Ränder der Begrenzungsteile (12, 14) mit den Begrenzungsteilen (12, 14) verschweißt oder verklebt sind, wobei das Fasergebilde (22) im Randbereich senkrecht von dem ersten Begrenzungsteil (12) zu dem zweiten Begrenzungsteil (14) geführt ist.

2. Vakuumdämmelement (10) nach Anspruch 1, wobei das Fasergebilde (22) einen Wärmeleitwert von kleiner 0,06 W/mK aufweist.

3. Vakuumdämmelement (10) nach einem der vorangegangenen Ansprüche, wobei das Fasergebilde (22) Glas-, Nylon-, Hanf-, Aramid- oder/und Carbonfasern umfasst.

4. Vakuumdämmelement (10) nach einem der vorangegangenen Ansprüche, wobei das Fasergebilde (22) in Form einzelner zwischen den Stützelementen (18, 20) gespannter Fäden ausgebildet ist.

5. Vakuumdämmelement (10) nach einem der vorangegangenen Ansprüche, wobei das Fasergebilde (22) als Fasergewebe ausgebildet ist.

6. Vakuumdämmelement (10) nach einem der Ansprüche 1-3, wobei das Fasergebilde im Randbereich als Gewebe ausgeführt ist und zwischen den Stützelementen (18, 20) als Faden.

7. Vakuumdämmelement (10) nach einem der vorangegangenen Ansprüche, wobei wenigstens eines der Begrenzungsteile (12, 14) Metall, Keramik, Glas, Laminat, und/oder Kunststoff umfasst.

8. Vakuumdämmelement (10) nach einem der vorangegangenen Ansprüche, wobei wenigstens eines der vakuumdicht ausgebildeten Begrenzungsteile (12, 14) ein Begrenzungsteil umfasst, das Öffnungen aufweist, wobei die Öffnungen mit dem Fasergebilde (22) überspannt und durch eine Folie abgedichtet sind.

9. Vakuumdämmelement (10) nach einem der vorangegangenen Ansprüche, wobei die Begrenzungsteile (12, 14) jeweils wenigstens eine Kante oder eine Ecke ausbilden.

10. Vakuumdämmelement (10) nach einem der vorangegangenen Ansprüche, wobei die ersten und zweiten Stützelemente (18, 20) stabförmig ausgebildet sind.

11. Vakuumdämmelement (10) nach Anspruch 8, wobei die ersten und zweiten Stützelemente (18, 20) in Reihen und Spalten gleichmäßig über die Begrenzungsteile (12, 14) verteilt sind.

12. Vakuumdämmelement (10) nach einem der Ansprüche 1-9, wobei die ersten und zweiten Stützelemente (18, 20) rippenförmig, insbesondere v-förmig ausgebildet sind und sich über eine gesamte Ausdehnung der Begrenzungsteile (12, 14) erstrecken.

13. Vakuumdämmelement (10) nach einem der vorangegangenen Ansprüche, wobei die ersten und zweiten Stützelemente (18, 20) Führungen und/oder Fixierungen für das Fasergebilde (22) aufweisen.

14. Vakuumdämmelement (10) nach einem der Ansprüche 1-13, wobei die Mittel (26) zum Abdichten des vakuumierten Raums (16) einen Folienbeutel umfassen, der die Begrenzungsteile (12, 14) mit dem dazwischen gelegenen vakuumierten Raum (16) vollständig umgibt.

15. Vakuumdämmelement (10) nach einem der vorangegangenen Ansprüche, wobei die Begrenzungsteile (12, 14) als einseitig geöffnete Quader oder Zylinder ausgebildet sind.

16. Thermischer Isolationsbehälter umfassend entweder ein Vakuumdämmelement (10) nach Anspruch 15 und ein als Deckel für den Quader oder den Zylinder ausgebildetes Vakuumdämmelement (10) nach einem der Ansprüche 1-14 oder zwei Vakuumdämmelemente (10) nach Anspruch 15, die so dimensioniert sind, dass sie ineinander schiebbar sind.

## Claims

1. A thermal vacuum insulation element (10) comprising:
a first flat limiting part (12) and a second flat limiting part (14) spaced apart from one another and defining an evacuated space (16) between them;
means (26) for sealing the evacuated space (16);
first support elements (18) extending away from the said first limiting part (12) into the said evacuated space (16) and second support elements (20) extending away from the said second limiting part (14) into the said evacuated space (16), wherein the said limiting parts (12, 14) are arranged with the said support elements (18, 20) in such a way that the first support elements (18) and the second support elements (20) protrude beyond one another and are spaced apart from one another, and wherein the first support elements (18) are spaced apart from the second limiting part (14), and wherein the second support elements (20) are spaced apart from the first limiting part (12); and
a fiber structure (22) connects the first support elements (18) and the second support elements (20) to one another, wherein the fiber structure (22) has a low heat conductivity and is designed to collect at least the pressure generated by the vacuum on the first and second limiting parts (12, 14), **characterized in that**
the fiber structure (22) also spans an edge region limiting the evacuated space (10), and wherein the limiting parts (12, 14) are configured to be vacuum-tight and the means (26) for sealing the evacuated space (16) comprise an edge film which is welded or bonded to the limiting parts (12, 14) along the edges of the limiting parts (12, 14), wherein the fiber structure (22) is perpendicularly guided in the edge region from the first limiting part (12) to the second limiting part (14).

2. Vacuum insulation element (10) according to claim 1,
wherein the fiber structure (22) has a heat conductivity value of less than 0.06 W/mK.

3. Vacuum insulation element (10) according to any one of the preceding claims, wherein the fiber structure (22) comprises glass, nylon, hemp, aramid or/and carbon fibers.

4. Vacuum insulation element (10) according to any one of the preceding claims, wherein the fiber structure (22) is configured in the form of individual threads stretched between the support elements (18, 20).

5. Vacuum insulation element (10) according to any one of the preceding claims, wherein the fiber structure (22) is formed as a fiber fabric.

6. Vacuum insulation element (10) according to any one of claims 1 to 3, wherein the fiber structure is configured as a fabric in the edge region and as a thread between the support elements (18, 20).

7. Vacuum insulation element (10) according to any one of the preceding claims, wherein at least one of the limiting parts (12, 14) comprises metal, ceramic, glass, laminate, and/or plastics.

8. Vacuum insulation element (10) according to one of the preceding claims, wherein at least one of the limiting parts (12, 14) formed in a vacuum-tight manner comprises a limiting part having openings, wherein the openings are spanned with the fiber structure (22) and sealed by a foil.

9. Vacuum insulation element (10) according to any one of the preceding claims, wherein the limiting parts (12, 14) each form at least one edge or one corner.

10. Vacuum insulation element (10) according to any one of the preceding claims, wherein the first and second support elements (18, 20) are configured rod-shaped.

11. Vacuum insulation element (10) according to claim 8,
wherein the first and second support elements (18, 20) are evenly distributed in rows and columns over the limiting parts (12, 14).

12. Vacuum insulation element (10) according to any one of claims 1 to 9, wherein the first and second support elements (18, 20) are configured rib-shaped, in particular v-shaped, and extend over an entire extension of the limiting parts (12, 14).

13. Vacuum insulation element (10) according to any one of the preceding claims, wherein the first and second support elements (18, 20) comprise guides and/or fasteners for the fiber structure (22).

14. Vacuum insulation element (10) according to any one of claims 1 to 13, wherein the means (26) for sealing the evacuated space (16) comprise a foil bag that completely surrounds the limiting parts (12, 14) with the evacuated space (16) located between them.

15. Vacuum insulation element (10) according to any one of the preceding claims, wherein the limiting parts (12, 14) are configured as cuboids or cylinders open on one side.

16. Thermal insulation container comprising either a vacuum insulation element (10) according to claim 15 and a vacuum insulation element (10) formed as a lid for the cuboid or cylinder according to one of claims 1 to 14, or two vacuum insulation elements (10) according to claim 15, which are dimensioned such that they can be slid into one another.

## Revendications

1. Elément isolant sous vide (10) thermique comprenant :
une première partie de délimitation plane (12) et une seconde partie de délimitation plane (14) qui sont espacées l'une de l'autre et définissent entre elles un espace mis sous vide (16) ;
des moyens (26) pour étanchéifier l'espace mis sous vide (16) ;
des premiers éléments de support (18) qui s'étendent dans l'espace mis sous vide (16) de manière à s'éloigner de la première partie de délimitation (12), et des seconds éléments de support (20) qui s'étendent dans l'espace mis sous vide (16) de manière à s'éloigner de la seconde partie de délimitation (14), dans lequel les parties de délimitation (12, 14) sont disposées avec les éléments de support (18, 20) de telle sorte que les premiers éléments de support (18) et les seconds éléments de support (20) dépassent les uns des autres et sont espacés les uns des autres, et dans lequel les premiers éléments de support (18) sont espacés de la seconde partie de délimitation (14), et dans lequel les seconds éléments de support (20) sont espacés de la première partie de délimitation (12) ; et
une structure à base de fibres (22) qui relie les premiers éléments de support (18) et les seconds éléments de support (20) entre eux, dans lequel la structure à base de fibres (22) présente une faible conductivité thermique et est configurée pour collecter la pression générée par le vide sur la première et la seconde partie de délimitation (12, 14), **caractérisé en ce que**
la structure à base de fibres (22) recouvre également un espace de bord délimitant l'espace mis sous vide (10), et dans lequel les parties de délimitation (12, 14) sont réalisées de manière étanche au vide et les moyens (26) pour étanchéifier l'espace mis sous vide (16) comprennent un film de bord qui est soudé ou collé aux parties de délimitation (12, 14) le long des bords des parties de délimitation (12, 14), dans lequel la structure à base de fibres (22) est guidée dans la zone de bord de manière perpendiculaire depuis la première partie de délimitation (12) vers la seconde partie de délimitation (14).

2. Elément isolant sous vide (10) selon la revendication 1, dans lequel la structure à base de fibres (22) présente une valeur de conductivité thermique inférieure à 0,06 W/mK.

3. Elément isolant sous vide (10) selon l'une quelconque des revendications précédentes, dans lequel la structure à base de fibres (22) comprend des fibres de verre, de nylon, de chanvre, d'aramide et/ou de carbone.

4. Elément isolant sous vide (10) selon l'une quelconque des revendications précédentes, dans lequel la structure à base de fibres (22) est réalisée sous la forme de divers fils tendus entre les éléments de support (18, 20).

5. Elément isolant sous vide (10) selon l'une quelconque des revendications précédentes, dans lequel la structure à base de fibres (22) est réalisée en tant que tissu à base de fibres.

6. Elément isolant sous vide (10) selon l'une quelconque des revendications 1-3, dans lequel
la structure à base de fibres est réalisée en tant que tissu dans la zone de bord et en tant que fil entre les éléments de support (18, 20).

7. Elément isolant sous vide (10) selon l'une quelconque des revendications précédentes, dans lequel au moins une des parties de délimitation (12, 14) comprend du métal, de la céramique, du verre, du stratifié et/ou du plastique.

8. Elément isolant sous vide (10) selon l'une quelconque des revendications précédentes, dans lequel au moins une des parties de délimitation (12, 14) réalisées de manière étanche au vide comprend une partie de délimitation qui présente des orifices, dans lequel les orifices sont recouverts de la structure à base de fibres (22) et sont étanchéifiés par un film.

9. Elément isolant sous vide (10) selon l'une quelconque des revendications précédentes, dans lequel les parties de délimitation (12, 14) réalisent respectivement au moins une arête ou un coin.

10. Elément isolant sous vide (10) selon l'une quelconque des revendications précédentes, dans lequel les premiers et les seconds éléments de support (18, 20) sont réalisés en forme de barre.

11. Elément isolant sous vide (10) selon la revendication 8, dans lequel les premiers et seconds éléments de support (18, 20) sont répartis en rangées et en colonnes de manière homogène sur les parties de délimitation (12, 14).

12. Elément isolant sous vide (10) selon l'une quelconque des revendications 1-9, dans lequel les premiers et seconds éléments de support (18, 20) sont réalisés en forme de nervure, en particulier en forme de V et s'étendent sur la totalité d'une extension des parties de délimitation (12, 14).

13. Elément isolant sous vide (10) selon l'une quelconque des revendications précédentes, dans lequel les premiers et seconds éléments de support (18, 20) présentent des guidages et/ou des fixations pour la structure à base de fibres (22).

14. Elément isolant sous vide (10) selon l'une quelconque des revendications 1-13, dans lequel les moyens (26) pour étanchéifier l'espace mis sous vide (16) comprennent un sachet en film qui entoure totalement les parties de délimitation (12, 14) avec l'espace mis sous vide (16) intercalé.

15. Elément isolant sous vide (10) selon l'une quelconque des revendications précédentes, dans lequel les parties de délimitation (12, 14) sont réalisées en tant que parallélépipède ou cylindre ouvert d'un côté.

16. Contenant d'isolation thermique comprenant soit un élément isolant sous vide (10) selon la revendication 15 et un élément isolant sous vide (10) selon l'une quelconque des revendications 1 - 14 réalisé en tant que couvercle pour le parallélépipède ou le cylindre soit deux éléments isolants sous vide (10) selon la revendication 15, qui sont dimensionnés de telle sorte qu'ils peuvent être enfilés l'un dans l'autre.
